Europäisches Patentamt

European Patent Office

Office européen des brevets

(19)

(11)  EP 1 462 504 A1

(12)  **EUROPEAN PATENT APPLICATION**
published in accordance with Art. 158(3) EPC

(43)  Date of publication:
    **29.09.2004  Bulletin 2004/40**

(51)  Int Cl.7: **C10G 27/04**, C10G 27/12,
    B01J 29/18, B01J 29/83,
    B01J 29/85, B01J 29/035

(21)  Application number: **02787975.8**

(22)  Date of filing: **20.11.2002**

(86)  International application number:
    **PCT/ES2002/000546**

(87)  International publication number:
    **WO 2003/044129 (30.05.2003 Gazette 2003/22)**

(84)  Designated Contracting States:
    **AT BE BG CH CY CZ DE DK EE ES FI FR GB GR
    IE IT LI LU MC NL PT SE SK TR**
    Designated Extension States:
    **AL LT LV MK RO SI**

(30)  Priority:  **20.11.2001  ES 200102669
        30.11.2001  ES 200102754**

(71)  Applicants:
    • **CONSEJO SUPERIOR DE INVESTIGACIONES
      CIENTIFICAS
      28006 Madrid (ES)**

    • **UNIVERSIDAD POLITECNICA DE VALENCIA
      46022 Valencia (ES)**

(72)  Inventors:
    • **CORMA CANOS, Avelino, I.T.Q. C.S.I C.
      46022 Valencia (ES)**
    • **DOMINE, Marcelo E., I.T.Q. C.S.I C.
      46022 Valencia (ES)**
    • **MARTINEZ SANCHEZ, Cristina, I.T.Q. C.S.I C.
      46022 Valencia (ES)**

(74)  Representative: **Ungria Lopez, Javier
      Avda. Ramon y Cajal, 78
      28043 Madrid (ES)**

(54)  **METHOD OF OXIDISING SULPHUR COMPOUNDS PRESENT IN GASOLINE, KEROSENE AND DIESEL FRACTIONS**

(57)   The invention relates to a method of oxidising sulphur compounds present in gasoline, kerosene and diesel fractions. The inventive method comprises an oxidation step in which a reaction mixture is subjected to a reaction involving the oxidation of said sulphur compounds with an oxidation agent, which is selected from the group consisting of peroxides, inorganic peroxides,, organic peroxides and hydroperoxides, in a liquid phase without the use of a solvent and in the presence of at least one micro-, and/or mesoporous solid catalyst which is selected from among microporous molecular sieves, mesoporous molecular sieves and combinations thereof. Moreover, the invention also comprises a separation step wherein products which have not reacted are separated from products which reacted in the reaction step. The channel diameter of the micro- and/or mesoporous catalyst is greater than 0.6 nm and said catalysts contain Ti in the lattice and in non-lattice positions.

Fig.1

**Description**

## TECHNICAL FIELD OF THE INVENTION

The present invention belongs to the field of hydrocarbons refining wherein heterogeneous catalysis methods are applied. More particularly, the invention comes within the sector of desulphurization of fuel fractions by means of catalytic oxidation techniques.

## STATE OF THE ART PRIOR TO THE INVENTION

Legislative requirements that have been introduced at the international and national level in different developed countries of the world with regard to liquid fuels, with the aim of reducing contamination of the environment, have led to a gradual reduction in the sulphur contents of gasoline and diesel cuts and have stimulated a major development of hydrodesulpurization (HDS) processes, which have widely dominated the desulphurization of liquid fuels in the past. One of the most important objectives in the area of petrol chemistry and refining is therefore the production of liquid fuels with a lower sulphur content, and it is the general consensus in the legislation of most countries to bring levels down to below 10 ppm in all commercial fuels in the next ten years. Lower contents of sulphur in transportation fuels lead to benefits for the quality of air by reducing emissions of SOx and indirectly also the quantity of NOx due to improving the performance of catalytic converters which function better in the absence of sulphur compounds.

Nevertheless, its cost, which is prohibitive for most small and medium refineries, and the need for greater reductions in sulphur levels in the composition of gasoline and diesel fractions have come together in order to encourage the development of alternative technologies which, either on their own or in combination with already existing ones, would produce a sharp fall in the S content down to the range 10-100 ppm.

Currently, among the most common sulphur compounds present in gasoline cuts, mention can be made of sulphides, disulphides, mercaptans, thiophene and its alkyl derivatives, and benzothiophene among others. In the case of petroleum distillate fractions normally used as diesel supply, whose initial distillation temperature is normally higher than 160°C, the predominant sulphur compounds are benzothiophene, dibenzothiophene and their respective alkylated derivatives. They are all causing agents of corrosion in refining equipment and in combustion engines, and they cause poisoning of catalysts used in refineries or in catalytic converters of gaseous effluents. Moreover, these compounds are one of the major causes of pollution due to the fact that, when subjected to combustion, they become converted into sulphur oxides which, when released into the atmosphere, give rise to the formation of oxyacids which contribute to the phenomenon known as acid rain.

Various alternative or complementary processes have been explored for desulphurization of gasoline and diesel, such as direct adsorption (US-A-4,830,733), bioprocessing (US-A-5,910,440, A. P. Borole et al., ACS Div. Pet. Chem. Preprints, 45, 2000) and selective oxidation (S. E. Bonde et al., ACS Div. Pet. Chem. Preprints, 44[2], 199, 1998; US-A-3,919,405; US-A-3,341,448); as well as the application of alternative technologies to already known processes, as is the case of the new OATS process (BP alkylation process, Hydrocarbon Processing, Feb. 2001).

One of the alternatives being studied lately is what are known as oxidative desulphurization (ODS) processes, wherein the aim is to oxidize the sulphur compounds present in liquid fuels in an economic and sufficiently selective manner, thereby increasing their polarity and molecular weight in order to facilitate their later separation by extraction or distillation. So far, no commercial process for oxidative desulphurization has been developed, primarily due to the combination of regulatory and economic requirements at the industrial scale, though there exists a wide variety of them under development (S. E. Bonde et al., ACS Div. Pet. Chem. Preprints, 45, 375, 2000).

The use of organic peroxiacids, such as peroxyacetic acid, has been reported for the elimination of sulphides, disulphides and mercaptans present in liquid fuels thereby achieving reductions of 95% in the sulphur content of some gasolines working at temperatures between 2 and 100°C (S. E. Bonde et al., ACS Div. Pet. Chem. Preprints, 44[2], 199, 1998). Heteropolyacids of the peroxotungstophosphate type in biphasic systems, with H2O2 as oxidizing agent and phase transfer agents, are capable of oxidizing mercaptans, dibenzothiophenes and alkyl-dibenzothiophenes, though they are less effective with thiophenes and benzothiophenes (F. M. Collins et al. J. Mol. Catal. A: Chem., 117, 397 1997).

The use of solid catalysts of the type Ti-silicalites in liquids containing sulphur compounds achieves low conversion levels to the corresponding sulphones (JP-A-11140462). Although catalysts of the type TS-1 and TS-2, based on microporous titanosilicates with zeolitic structure (US-A-4,410,501) permit selective oxidation of different sulphides with hydrogen peroxide in two phases, one consisting of the hydrocarbon phase and the other the aqueous phase, to which a solvent is added (R. S. Reddy et al., J. Chem. Soc., Chem. Commun., 84, 1992; V. Hulea et al., J. Mol. Catal. A: Chem., 111, 325, 1996), their small pore opening makes their use impossible in processes involving larger molecules as in the case of benzothiophenes, dibenzothiophenes, and their respective alkyl, dialkyl and trialkyl substituted homologues, which are the main components of the diesel fraction, alkylates, and whose oxidation is more problematic.

Oxidation has recently been carried out of sulphur compounds present in kerosene in a biphasic system, consisting of the hydrocarbon phase and an aqueous phase, in the presence of an oxidizing agent soluble in the aqueous phase (aqueous $H_2O_2$), adding acetonitrile as co-solvent and using Ti-Beta zeolite and the mesoporous material Ti-HMS as catalysts (FR-A-2802939; V. Hulea et al., J. Catal., 198, 179, 2001). The presence of a biphasic medium forces the introduction of a subsequent separation process of the phases, along with the recovery of the solvent found in a phase together with $H_2O$ and the greater part of the sulphur compounds oxidation products. In the document FR-A-2802939, it is specifically indicated that the catalysts used in the process, and more specifically Ti-Beta zeolite, must contain the active component of the catalyst (Ti) in lattice positions only. This would be in accordance with previous works wherein this material has been used for olefin epoxidation reactions and wherein it is emphasised that the active Ti is located in the lattice, with the extra-lattice Ti or Ti in non-lattice positions being harmful for the epoxidation process (J. C. van der Wall et al., J. Mol. Catal. A : Chem. 124, 137, 1997).

The necessary presence of solvents in the desulphurization reactions of the state of the art and the relatively low conversion rates of conventional processs imply drawbacks which complicate the application of those reactions and processs at industrial scale and increase the cost of doing so.

DESCRIPTION OF THE INVENTION

The aim of the present invention is to provide a new process for the oxidation of sulphur compounds in fuel fractions selected among gasoline fractions, kerosene fractions and diesel fractions, which overcomes the drawbacks of the state of the art. In order to achieve this objective, the present invention refers to a process for the oxidation of sulphur compounds in fuel fractions selected among gasoline fractions, kerosene fractions and diesel fractions, which comprises an oxidation stage, wherein the reaction mixture containing at least one of those fractions is subjected to an oxidation reaction of those sulphur compounds with at least one oxidizing agent selected from among peroxides and hydroperoxides, in a single liquid phase and without using solvent, and in the presence of at least one solid micro- and/or mesoporous catalyst, selected from the group consisting of microporous molecular sieves, mesoporous molecular sieves and combinations thereof, and a separation stage wherein the unreacted products are separated from those which have reacted in the reaction stage, this process being characterized in that the molecular sieves have a channel diameter greater than 0.6 nm and contain at least Si and Ti incorporated into the lattice and in non-lattice positions.

The present invention is based on the surprising fact that solid micro- and/or mesoporous catalysts formed from micro- and mesoporous molecular sieves, such as zeolites for example, which at the same time contain Ti in lattice positions and in non-lattice positions, permit the oxidation of thiophene compounds with greater conversions per weight of catalyst than, for example, zeolites wherein Ti exists only in the lattice, as indicated in document FR-A-2802939 and in the corresponding work published in J. Catal., 198, 179 (2001). Moreover, it has been found that there exists a zone of optimum compositions in reference to the extra-lattice Ti / lattice Ti, in zeolitic catalysts, these catalysts being capable of functioning in a monophasic system instead of in the biphasic system described in the document FR-A-2802939, or in a biphasic system wherein a co-solvent is used, such as for example acetonitrile. Furthermore, these catalysts are more active and selective than their analogues containing only lattice Ti when working in a biphasic system, in this case using a co-solvent. It has also been observed that a catalyst based on a "composite" type material formed from an organic components joined to the inorganic components formed by the microporous molecular sieves is active and more selective than the pure inorganic material.

Finally, it has been observed that when Si-C bonds are introduced into the catalysts defined above, the resulting catalyst is a hybrid organic-inorganic material containing Ti in lattice and non-lattice positions, which not only produces excellent results when working with peroxides or hydroperoxides as oxidizing agents and without solvent, or with $H_2O_2$ and a co-solvent, but it also produces excellent levels of oxidation of sulphur compounds when working in a single phase, and peroxides or hydroperoxides are used, such as for example tert-butyl hydroperoxide (TBHP) as oxidizing agent. The use of organic hydroperoxides as oxidizing agents with the catalysts claimed in this patent enables a selective oxidization process to be carried out on sulphur compounds in liquid fuels wherein, and also eliminates the later stages of phase separation also produces tert-butanol, a compound which raises the octane rating of gasolines, as a by-product deriving from the use of TBHP as oxidizing agent. The process of the present invention, even though it is also applicable for desulphuring unrefined fractions of crude, is especially suited for the oxidation of remnant sulphur compounds in hydrotreated fractions of the gasoline, kerosene and diesel type, and with sulphur contents below 300 ppm. Moreover, the microporous molecular sieves and their organic-inorganic "composites", all of them containing Si and Ti, are active and selective for the oxidation of sulphur compounds present in liquid fuels working with inorganic peroxides and hydroperoxides as oxidizing agents, such as for example H2O2, perborates or $H_2O_2$-urea complexes among others, in the absence of solvent, or adding a co-solvent, such as for example acetonitrile; as well as when working in a single phase, and without solvent, and using organic peroxides, such as for example tert-butyl hydroperoxide (TBHP). In this case, the process of the present invention, even though it is also applicable for desulphurizing fractions of non-pretreated gasoline, kerosene and diesel, is especially suited for the oxidation of remnant sulphur compounds in hydrotreated fractions of the gasoline, kerosene and diesel type, and with sulphur contents below 500 ppm.

In accordance with the invention, organic or inorganic hydroperoxides, such as for example t-butyl hydroperoxide, perborates, $H_2O_2$ or $H_2O_2$-urea complexes, can be used as oxidizing agents.

When the catalyst is a microporous solid selected from among microporous molecular sieves, such as for example zeolites ITQ-7, UTD-1; Mordenite, Beta, ITQ-16, they all contain at least Si and Ti, and are able to have Si-C bonds in their composition, and wherein the Ti is in lattice and non-lattice or extra-lattice positions, in contrast to what is reported in document FR-A-2802939 wherein it is emphasised and specified that the Ti catalysts claimed have to contain Ti only in lattice positions. In the case wherein the catalyst is a mesoporous solid based on mesoporous molecular sieves, such as for example MCM-41, MCM-48, SBA-15, it contains Ti in lattice positions (tetrahedral Ti) and Ti in extra-lattice positions (octahedral Ti), also containing Si-C bonds in its composition.

A convenient microporous molecular sieve has the following chemical formula in its calcined and anhydrous state:

$$y\, (A_{1/n}{}^{n+}\, XO_2) : t\, TO_2 : SiO_2 : x\, TiO_2$$

wherein:

- X represents at least one trivalent element,
- y lies between 0 and 0.2,
- A represents mono-, di- or trivalent cations, or mixtures thereof,
- n = 1, 2 or 3,
- T represents at least one tetravalent element other than Si and Ti,
- t lies between 0 and 0.2, and
- x lies between 0.02 and 0.12 (between 3 and 12 % by weight as $TiO_2$)

Said microporous molecular sieve can be synthesized in the presence of compounds containing Si-C groups, or be subjected to a post-synthesis sililation stage creating Si-C bonds, and consequently an hybrid material or organic-inorganic composite.

Among those solid microporous materials, for example the zeolites Beta, ITQ-7, UTD-1, Mordenite, ITQ-7, ITQ-16 and in general microporous solids containing channels with rings of 12 or more members with the diameter of at least one of their pores being greater than 0.6 nm, can be cited. The titanium is introduced during the synthesis stage, or also in a treatment after the synthesis. The oxidizing agents are organic peroxides or hydroperoxides such as for example t-butyl hydroperoxide, or inorganic peroxides such as perborates, $H_2O_2$ or $H_2O_2$-urea complexes. In the process of the present invention, the catalyst can function in a monophasic system wherein the liquid fuel and the oxidizing agent are mixed together, from the point of view of the liquid compounds, and in any case without the need to use a solvent, such as for example acetonitrile which is described in the document FR-A-2802939. By means of this selective oxidation, the sulphur compounds present in fractions of gasoline (in both light and heavy fractions), kerosene and diesel are transformed into other oxidized products with different boiling point and different polarity, which have a boiling point above the cut of the fractions in question and/or which can be easily extracted, such as for example by separation by adsorption, by distillation or by extraction following conventional techniques, or they can be selectively extracted. By means of the process of the present invention, high conversions and selectivities in the oxidation of said sulphur compounds are obtained. The catalysts used in the process of the present invention containing lattice and extra-lattice Ti are also active and selective, and in any case more active than the Ti catalysts used in the process described in the document FR-A-2802939, wherein it is specified that the Ti must be only in the lattice positions, when it is wished to work in the presence of solvent.

In accordance with the present invention, the oxidation of sulphur compounds present in liquid fuels is carried out by bringing into contact a reactive mixture containing the fuel fraction and the organic peroxide or hydroperoxide, in a single phase and in the absence of solvent, or with a small quantity of solvent, such as for example acetonitrile, with the solid microporous catalyst, containing Ti in lattice and extra-lattice positions, and containing Si-C species or not, at a temperature between 10 and 120°C during reaction times which can vary between 2 minutes and 24 hours depending on the catalyst and on the reaction conditions used. The ratio by weight of the fuel fraction to catalyst lies between 5 and 600, and preferably between 10 and 300, the ratio by weight between the fuel fraction and the oxidizing agent being between 300 and 10, and preferably between 200 and 20. The hydrophilicity-hydrophobicity properties of the catalyst can be modified by means of the synthesis conditions by which the molecular sieves are obtained, or by means of the anchoring of organosiliceous compounds on the surface of the microporous solid in a post-synthesis treatment, the result of that anchoring being an hybrid catalyst or organic-inorganic composite containing at least Si, and Ti in lattice and extra-lattice positions, and which can also contain silicon bonded to carbon. The incorporation of titanium in the molecular sieves containing pores with rings of 12 or more members, and containing some channel with a diameter greater than 0.6 nm, can be done by means of direct synthesis wherein the titanium precursor is added to the synthesis gel, in such a way that the final material contains Ti in both lattice and extra-lattice positions; or also by means of the later anchoring of titanium compounds on the surface of the materials.

As examples of solid microporous catalysts used, a description is given below of those formed from Ti-Beta with Ti in lattice and extra-lattice positions. By means of using UV-Visible and Raman spectroscopy, these catalysts show the presence of tetrahedrally coordinated Ti (lattice Ti) and octahedral Ti in extra-lattice positions, or even Ti in the form of $TiO_2$.

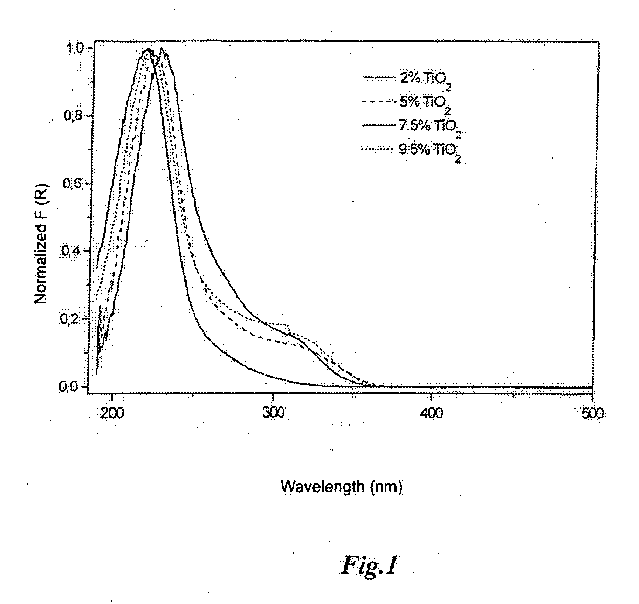

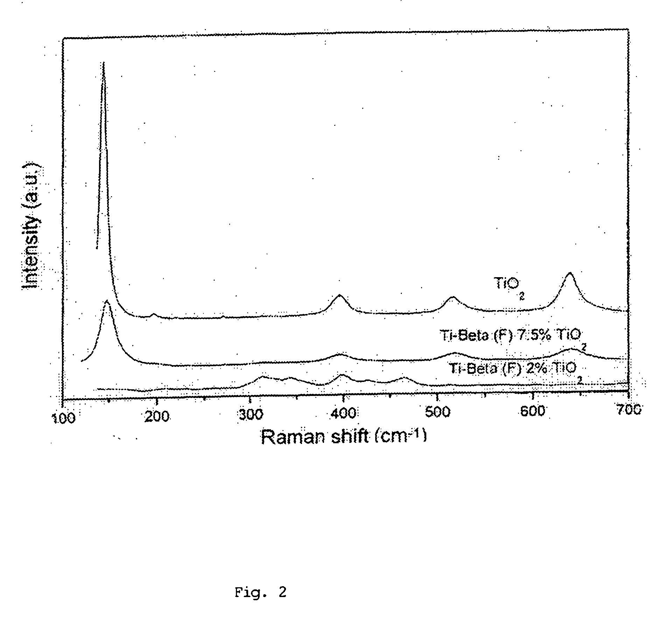

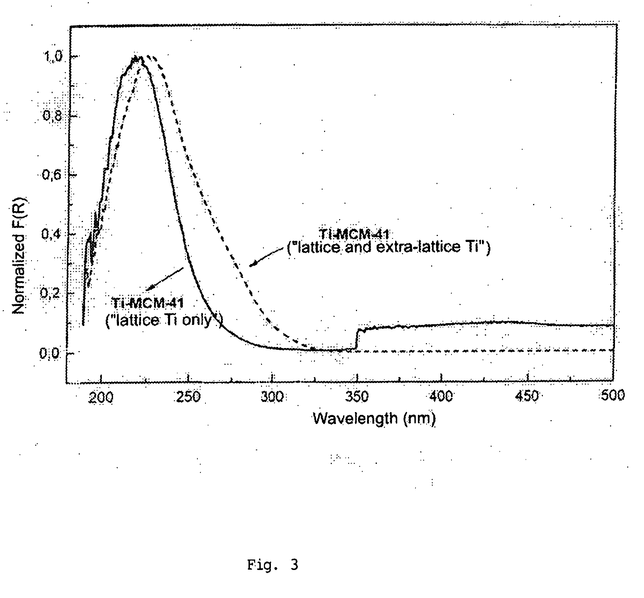

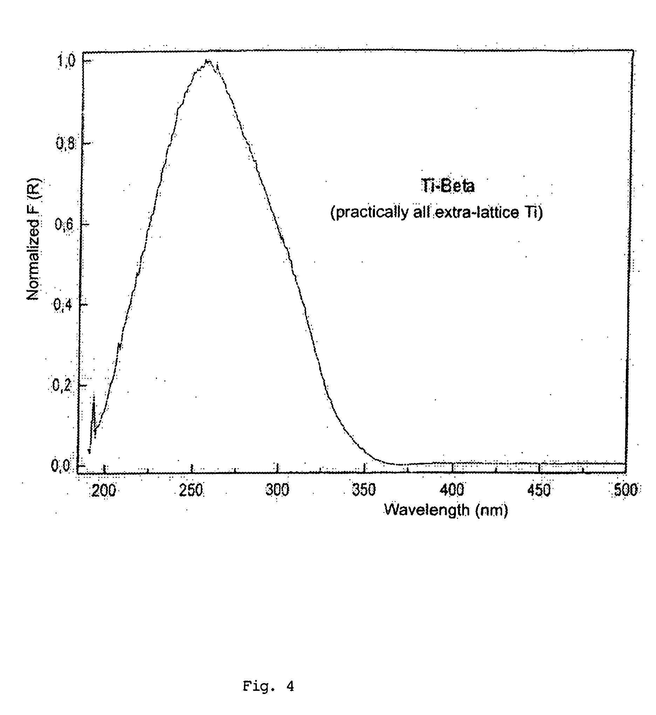

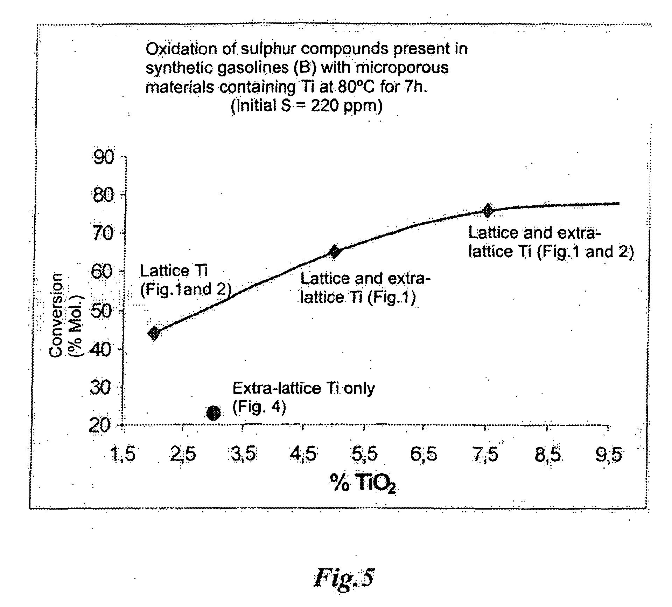

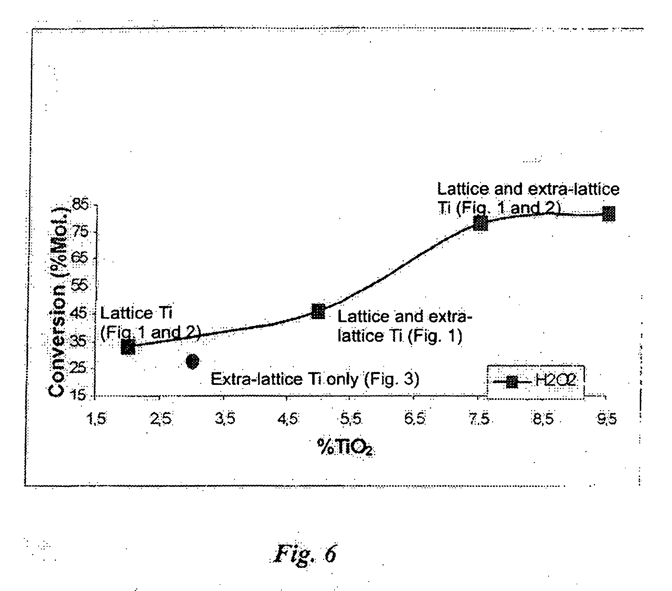

Catalysts based on Beta zeolite display an intense band in the UV-Vis spectrum centred around 220 nm, indicating the presence of Ti in tetrahedral environments and in lattice positions, and an additional wide band at 270-280 nm indicating the presence of Ti in octahedral environments, which correspond to Ti located outside the zeolite lattice (Figure 1) (J. C. van der Waal et al., J. Mol. Catal. A : Chem. 124, 137, 1997). Also, these catalysts display a Raman spectrum characterized by the presence of a band centred on 150 cm-1 attributed to the presence of Ti located outside the zeolite lattice (Figure 2) (C. B. Dartt et al., Appl. Catal., A143, 53, 1996).

The presence of both types of Ti centres in these materials produces catalysts, claimed in this invention, which are more active and selective than the corresponding catalysts only containing lattice Ti, as described in the document FR-A-2802939 for oxidation reactions of sulphides in general, and of alkyl or aryl-sulphides, thiophene, alkyl-thiophenes, benzothiophene, alkyl-benzothiophenes in particular, though without being limiting.

Species containing Si-C bonds can be introduced into these catalysts in a stage during the synthesis, or in a post-synthesis stage, giving rise to the corresponding organic-inorganic microporous material which is used in the oxidation process of sulphur compounds of the present invention.

The microporous catalysts described in this specification can also be used for oxidizing sulphur compounds in a system which may or may not contain a co-solvent, and $H_2O_2$ as oxidizing agent. The activity of our catalyst containing Ti in lattice and extra-lattice positions, in the case of microporous materials, is superior to that described in the document FR-A-2802939 wherein catalysts are used containing Ti only in the lattice positions.

Our catalysts can carry out the oxidation of sulphur compounds, and more specifically thiophenic compounds present in petroleum derivatives, in a process in a single phase and in the absence of solvent, using as oxidizing agents inorganic peroxides such as the complex H2O2 - $H_2N-CONH_2$ (hydrogen peroxide - urea) or a perborate.

For its better operability, a binder can be added to the catalyst formed by the microporous solid, or a matrix can be added, which can be formed of silica, alumina, kaolin, mixtures of these or any other component known in the art. The purpose of the binder and/or matrix is, among others, to provide better physical resistance to the catalyst. The content in binder and/or matrix usually lies between 1 and 80% by weight.

The process for oxidation of sulphur in fractions of gasoline, kerosene and diesel is characterized in that the oxidation stage is carried out in a discontinuous reactor, a continuous stirring tank reactor (CSTR), in a continuous fixed bed reactor, in a fluidized bed reactor, or in a boiling bed reactor, using peroxides or hydroperoxides as oxidizing agents in a single organic phase and in the absence of solvent, or in two phases by means of adding a co-solvent. In the case of a discontinuous reactor, the ratio by weight of the fuel fraction to catalysts lies between 5 and 600 and preferably between 10 and 300, the ratio by weight between the fuel fraction and the oxidizing agent being between 300 and 10, and preferably between 200 and 20; while the ratio by weight between the co-solvent and the fuel fraction is between 0 and 8, and preferably between 0 and 4. The temperature of the process lies between 10 and 120°C and preferably between 20 and 80°C and the reaction time varies between 2 minutes and 24 hours. The products of the oxidation reaction are separated by distillation, extraction with a suitable solvent or by adsorption, for example in an adsorption column which permits the most polar oxidized compounds formed during the oxidation stage of the sulphur compounds to be selectively adsorbed; the non-reacted remnants being able to be totally or partially recycled to the reactor.

With regard to solid mesoporous catalysts based on mesoporous molecular sieves, or containing micro and mesopores, claimed in this invention, these have the following chemical formula in their calcined and anhydrous state:

$$y (A_{1/n}^{n+} XO_2) : t\, TO_2 : SiO_2 : x\, TiO_2$$

wherein x can vary between 0.015 and 0.065 (2 and 8% by weight in the form of $TiO_2$) and X corresponds to a trivalent element, such as for example Fe, Al, B, Ga, Cr or mixture thereof, with y being between 0 and 0.2 and preferably between 0 and 0.1. A corresponds to one or more mono-, di- or trivalent compensation cations, or mixtures thereof, with n = 1, 2 or 3. T corresponds to tetravalent elements other than Si and Ti, such as for example V, Sn, and t lies between 0 and 1, and preferably between 0 and 0.2. Introduced into that sieve during the synthesis, or in post-synthesis stages are some organic groups R, in such a way that Si-C bonds are created, wherein R corresponds to organic compounds such as alkyl, aryl or polyaromatic groups, which may or may not be functionalized with acid, amine, thiol, sulphonic or tetraalkylammonium groups.

With the catalysts described above, the oxidation can be carried out of sulphur compounds, and more specifically the oxidation of thiophenic compounds present in petroleum derivatives, in a process in a single liquid phase and in the absence of solvent, using as oxidizing agents organic hydroperoxides such as for example tert-butyl hydroperoxide or inorganic peroxides such as for example the complex $H_2O_2$ - $H_2N$-CO-$NH_2$ (hydrogen peroxide ⁂ urea) or a perborate.

In the process for oxidation of sulphur in fractions of gasoline, kerosene and diesel, the oxidation stage can be carried out in reactors of the type discontinuous, continuous stirring tank (CSTR), continuous fixed bed, fluidized bed, or a boiling bed reactor, using hydroperoxides as organic oxidizing agents in a single organic phase and in the absence of solvent. In the case of a discontinuous reactor, the ratio by weight of the fuel fraction to catalyst habitually lies between 5 and 600 and preferably between 10 and 300. The ratio by weight between the fuel fraction and the oxidizing agent conveniently lies between 300 and 10, and preferably between 200 and 20. The temperature of the process is conveniently between 10 and 120°C and preferably between 20 and 80°C; and the reaction time varies between 2 minutes and 24 hours. The products of the oxidation reaction can be separated by distillation, extraction with a suitable solvent or by adsorption in, for example, an adsorption column which permits the most polar oxidized compounds formed during the oxidation stage of the sulphur compounds to be selectively adsorbed; the non-reacted remnants being able to be totally or partially recycled to the reactor.

## MODES OF EMBODYING THE INVENTION

The following examples illustrate embodiments corresponding to the preparation of catalysts which can be used in the process of the present invention, and to the application of them to the selective oxidation reaction of compounds with sulphur in fractions of heavy gasoline and simulated gasoline and/or diesel.

In the examples, reference will be made to certain figures wherein

figure 1 shows UV-visible spectra of various Beta type materials described in greater detail in the examples;
figure 2 shows Raman spectra of various Beta type materials described in greater detail in examples 1 and 2;
figure 3 shows UV-visible spectra of various Ti-MCM-41 type materials described in greater detail in examples 6 and 7;
figure 4 shows a UV-visible spectrum of a Ti-Beta type material to which reference is made in examples 3 and 11; and
figure 5 shows the results of a test described in greater detail in example 5;
figure 6 shows the results of the test of example 13 referring to the oxidation of sulphur compounds present in synthetic gasoline (B) with microporous materials containing Ti at 80°C for 7 h (Initial S = 220 ppm);
figure 7 shows the results of the test of example 14 referring to the oxidation of sulphur compounds present in synthetic gasoline (B) with H2O2 at 80°C for 7 h (Initial S = 220 ppm);
figures 8 and 9 shows the results of the test of example 15 referring to the oxidation of sulphur compounds present in synthetic gasoline (B) with H2O2 at 80°C for 7 h (Initial S = 220 ppm).

In the example, the compositions of the heavy gasoline and simulated gasoline and diesel were as detailed in the following tables:

**Cut of Commercial Heavy Gasoline >>>>>>> HCN (from COMPAÑÍA ESPAÑOLA DE PETROLEOS, S.A. ⅋ CEPSA)**

Composition

Initial Tb (°C) = 80.6  -  Final Tb (°C) = 226.5

| | Component | % w/w in the mixture | S in the mixture (ppm) |
|---|---|---|---|
| Hydrocarbons | Aromatics | 81.52 | - |
| | iso-Paraffins | 10.88 | - |
| | Naphthenes | 4.43 | - |
| | Olefins | 1.95 | - |
| | Parafins | 1.22 | - |
| Compounds with S | Mercaptans | | 8 |
| | Thiophene | | 2 |
| | 2-Methyl-Thiophene | | 13 |
| | 3-Methyl-Thiophene | | 20 |
| | C2-Thiophene | | 94 |
| | C3-Thiophene | x | 294 |
| | C4-Thiophene | | 204 |
| | Benzo-Thiophene | | 947 |
| | C1-Benzothiophene | | 7 |
| | C2-Benzothiophene | | 3 |
| | C3-Benzothiophene | | 5 |
| | S in Gasoline (ppm) = | | 1583 |
| | Total S (ppm) = | | 1598 |

**Cut of Light Gasoline >>>>>>> LCN (from CEPSA)**

Composition

Initial Tb (°C) = 41.0 - Final Tb (°C) = 198.1

| | Component | % w/w in the mixture | S in the mixture (ppm) |
|---|---|---|---|
| Hydrocarbons | Aromatics | 16.78 | - |
| | iso-Paraffins | 33.86 | - |
| | Naphthenes | 9.80 | - |
| | Olefins | 34.64 | - |
| | Parafins | 4.92 | - |
| Compounds with S | Mercaptans | | 6 |
| | Thiophene | | 60 |
| | 2-Methyl-Thiophene | | 63 |
| | 3-Methyl-Thiophene | | 71 |
| | C2-Thiophene | | 60 |
| | Tetrahydrothiophene | | 7 |
| | C3-Thiophene | x | 20 |
| | C4-Thiophene | | 5 |
| | Benzo-Thiophene | | 0 |
| | C1-Benzothiophene | | 2 |
| | C2-Benzothiophene | | 1 |
| | C3-Benzothiophene | | 2 |

S in Gasoline (ppm) = 291

Total S (ppm) = 296

## Synthetic Gasoline (A) >>>>>>> Composition

|  | Component | % w/w in the mixture | S in the mixture (ppm) |
|---|---|---|---|
| Hydrocarbons | Aromatics | 20.0 | - |
|  | Olefins | 12.0 | - |
|  | Paraffins | 68.0 | - |
| Compounds with S | 2-Methyl-Thiophene |  | 80 |
|  | Di-Methyl-Thiophene | x | 60 |
|  | Benzo-Thiophene |  | 80 |

S in Mixture (ppm)   =   220

## Synthetic Gasoline (B) >>>>>>> Composition

|  | Component | % w/w in the mixture | S in the mixture (ppm) |
|---|---|---|---|
| Hydrocarbons | Aromatics | 20.0 | - |
|  | Olefins | 12.0 | - |
|  | Paraffins | 68.0 | - |
| Compounds with S | Thiophene |  | 60 |
|  | 2-Methyl-Thiophene | x | 60 |
|  | Di-Methyl-Thiophene |  | 40 |
|  | Benzo-Thiophene |  | 60 |

S in Mixture (ppm)   =   220

## Synthetic Diesel (A) >>>>>>> Composition

| | Component | % w/w in the mixture | S in the mixture (ppm) |
|---|---|---|---|
| Hydrocarbons | Aromatics | | - |
| | iso-Paraffins | | - |
| | Paraffins | 99.9 | - |
| Compounds with S | Thiophene | | 0 |
| | Alkyl-Thiophene | | 0 |
| | Benzo-Thiophene | 0.1 | 300 |
| | Alkyl-Benzothiophene | | 300 |
| | Di-Benzothiophene | | 300 |
| | Alkyl-Dibenzothiophene | | 0 |
| S in Mixture (ppm) | | = | 900 |

## Simulated Diesel (A) >>>>>>> Composition

| | Component | % w/w in the mixture | S in the mixture (ppm) |
|---|---|---|---|
| Hydrocarbons | Aromatics | | - |
| | iso-Paraffins | | - |
| | Paraffins | 99.9 | - |
| Compounds with S | Thiophene | | 0 |
| | Alkyl-Thiophene | | 0 |
| | Benzo-Thiophene | 0.1 | 100 |
| | Alkyl-Benzothiophene | | 100 |
| | Di-Benzothiophene | | 100 |
| | Alkyl-Dibenzothiophene | | 0 |
| S in Mixture (ppm) | | = | 300 |

**Example 1: Preparation of a microporous material (Beta type) containing Ti in lattice and extra-lattice positions in its composition.**

35 g of tetraethylorthosilicate (TEOS) are hydrolized in 41.98 g of tetraethylammonium hydroxide (TEAOH, 35% aqueous solution) and 5.96 g of $H_2O_2$ (35%). 3.83 g of Ti tetraethoxide are then added and the mixture is left stirring and evaporating the ethanol formed in the hydrolysis of the TEOS. 4.15 g of HF (ac., 48%) are then added along with a suspension of Beta zeolite seeds (0.4 g of dealuminized Beta zeolite in 2 g of water). The molar composition of the gel is as follows:

$TiO_2 : 10 \ SiO_2 : 6 \ TEAOH : 3.6 \ H_2O_2 : 80 \ H_2O : 6 \ HF$

The resulting mixture is heated at 140°C in autoclaves internally lined with PTFE and during the heating the autoclaves are kept under rotation (60 rpm). After 20 days of heating, the mixture (pH = 8.7) is filtered and 23 g Beta zeolite are obtained of high crystallinity (higher than 90% by comparison with a standard) for every 100 g of gel. The obtained solid is calcined in an atmosphere of air at 580°C for 3 hours. The X-ray diffraction pattern of the solid indicates that the crystallinity of the material has been maintained. The Ti content of the zeolite in its calcined anhydrous form, determined by chemical analysis, is 7.5% by weight, expressed as TiO2, and its UV-Visible and Raman spectra are shown in Figures 1 and 2.

**Example 2: Preparation of a microporous material (Beta type) containing Ti only in lattice positions in its composition.**

55 g of tetraethylorthosilicate (TEOS) are hydrolized in 62.40 g of tetraethylammonium hydroxide (TEAOH, 35% aqueous solution) and 8.80 g of $H_2O_2$ (35%). 2.41 g of Ti tetraethoxide are then added and the mixture is left stirring and evaporating the ethanol formed in the hydrolysis of the TEOS. 6.22 g of HF (ac., 48%) are then added along with a suspension of Beta zeolite seeds (0.64 g of dealuminized Beta zeolite in 3 g of water). The molar composition of the gel is as follows:

$TiO_2 : 25 \ SiO_2 : 14 \ TEAOH : 8.6 \ H_2O_2 : 190 \ H_2O : 14 \ HF$

The resulting mixture is heated at 140°C in autoclaves internally lined with PTFE and during the heating the autoclaves are kept under rotation (60 rpm). After 6 days of heating, the mixture (pH = 8.0) is filtered and 24 g Beta zeolite of high crystallinity are obtained (higher than 95% by comparison with a standard) for every 100 g of gel. The solid obtained is calcined in an atmosphere of air at 580°C for 3 hours. The X-ray diffraction pattern of the solid indicates that the crystallinity of the material has been maintained. The Ti content of the zeolite in its calcined anhydrous form, determined by chemical analysis, is 2.3% by weight, expressed as $TiO_2$, and its UV-Visible and Raman spectra are shown in Figures 1 and 2.

**Example 3: Preparation of a microporous material (Beta type) with practically all the Ti located in extra-lattice positio, in its composition.**

30 g of tetraethylorthosilicate (TEOS) and 32.99 g of tetraethylammonium hydroxide (TEAOH, 35% aqueous solution) are mixed in a vessel and the mixture is left stirring and evaporating the ethanol formed in the hydrolysis of the TEOS. In order to clarify the solution, 3.2 g of hydrofluoric acid (HF, 48% in water) are added and a gel is obtained. A suspension of Beta zeolite seeds (0.36 g of dealuminized Beta zeolite in 1.5 g of water) is then added. The molar composition of the gel is as follows:

$SiO_2 : 0.27 \ TEA_2O : 0.54 \ HF : 7.5 \ H_2O$

The resulting gel is placed in an autoclave lined with PTFE and heated at 140°C under rotation (60 rpm) for 24 hours. Finally, the product is recovered by filtration and a Beta zeolite is obtained whose X-ray diffraction pattern shows a crystallinity of 100%. The solid is calcined at 580°C for 3 hours maintaining a high crystallinity.

The solid thus obtained (Beta zeolite) is impregnated with a titanium compound on the surface, in accordance with the following process: 5 g of the Beta zeolite is impregnated with 50 g of a solution of titanium tetra-iso-propoxide Ti $\{[(CH_3-)_2 - CH-O]_4\}$ in isopropanol (at 0.5% w/w), with stirring for 2 hours. The resulting mixture is vacuum heated with continual stirring until evaporation of the alcohol. The resulting solid is washed with dichloromethane and then calcined in an atmosphere of air at 530°C for 3 hours. The X-ray diffraction pattern of the solid indicates that the crystallinity of the material has been maintained, while its UV-Visible and Raman spectra can be seen in Figure 4.

**Example 4: Comparison: Activity for the selective oxidation of sulphur compounds present in synthetic gasoline (A) with TBHP and in a single liquid phase, in the absence of solvent, using a Ti-Beta catalyst containing Ti in lattice and extra-lattice positions (Example 1), a Ti-Beta catalyst containing Ti only in lattice positions (Example 2) and a catalyst with Ti only in extra-lattice positions (Example 3).**

30 mg of one of the materials described in examples 1, 2 and 3 are introduced into a glass reactor at 80°C containing 15000 mg of synthetic gasoline (A) and 80 mg of t-butyl hydroperoxide (TBHP, 80% sol. by weight). The reaction mixture consisting of a single liquid phase is stirred and a sample is taken after 7 hours of reaction. The samples are analysed by means of GC with specific S detector, with the initial and final compositions in terms of content of non-oxidized sulphur compounds for the reaction mixtures, and the conversions obtained being as follows:

| S in Mixture (ppm) | - | Specific S Detector | |
|---|---|---|---|
| Ti-Beta with TI in lattice | Ti-Beta in lattice | Ti-Beta with Ti and extra-lattice with extra-lattice Ti | |
| Initial | 240 | 240 | 240 |
| Final | 144 | 21 | 201 |
| ------------- | ------------------------------ | ------------------------------- | --------------- |
| Conv. (%) = | 40.0 | 92.0 | 17.3 |

The results clearly indicate that the Ti-Beta catalyst containing Ti in lattice and extra-lattice positions is more active than the one containing Ti only in lattice or Ti practically only in extra-lattice positions.

**Example 5: Influence of the content of lattice and extra-lattice Ti on the activity of the catalysts for the selective oxidation of sulphur compounds present in a mixture of synthetic gasoline (B) with TBHP as oxidizing agent and in the absence of solvent.**

30 mg of the catalyst are introduced into a glass reactor at 80°C containing 15000 mg of synthetic gasoline (B) and 80 mg of t-butyl hydroperoxide (TBHP, 80% sol. by weight). The reaction mixture consisting of a single liquid phase is stirred and a sample is taken after 7 hours of reaction. The samples are analysed by means of GC with specific S detector, and the conversions obtained for each of the catalysts tested are illustrated in figure 5.

The results show that the catalysts containing Ti in lattice and extra-lattice positions are more active than those possessing Ti only in the lattice, and also that the activity depends on the ratio of lattice Ti / extra-lattice Ti.

**Example 6: Preparation of a mesoporous molecular sieve type MCM-41 containing Ti in lattice and extra-lattice positions in its composition.**

3.11 g of cetyltrimethylammonium bromide (CTAB) are dissolved in 20.88 g of water. To this solution 5.39 g of tetramethylammonium hydroxide (TMAOH) and 0.30 g of titanium tetraethoxide (TEOT) are added, and it is stirred until complete dissolution of the titanium. After that, 3.43 g of silica are added giving rise to a gel which is stirred at room temperature for 1 hour at 250 rpm. The resulting mixture is introduced into autoclaves and heated at 100°C at the autogenous pressure of the system for 48 hours. After that time, the solid is recovered by filtration, thorough washing with distilled water and drying at 60°C for 12 hours.

The activation of the material can be carried out by means of calcination or by chemical extraction. In the first case, 3.0 g of the solid material are placed in a tubular quartz reactor and a current of dry nitrogen is made to pass through it at 50 ml·min-1 while the temperature is raised to 540°C at 3°C·min-1. Once the temperature has been reached, nitrogen is passed for 60 minutes, after which the flow of nitrogen is replaced by a flow of dry air at 50 ml·min-1. The calcination is extended for further 360 minutes and the solid is cooled down to room temperature. This heat treatment permits all the organic matter occluded in the pores of the material to be completely eliminated. In the case of chemical extraction, 5.5 g of the material are treated with 276.4 g of a solution of 0.05 M sulphuric acid in ethanol. This suspension is stirred at reflux for one hour. The solid is recovered by filtration and washed with ethanol until neutral pH. The resulting solid is dried at 100°C for 30 minutes, with 3.51 g of product being obtained. The resulting solid is subjected to a second stage of extraction wherein 3.5 g of solid are added to a solution of 0.15 M hydrochloric acid in ethanol/heptane (48:52), using a liquid/solid ratio of 50. This suspension is refluxed with constant stirring for 24 hours, and then filtered and washed with ethanol. The resulting solid is dried at 60°C for 2 hours.

This solid displays a specific surface of 983 m-2·g-1 in addition to displaying UV-Vis spectrum bands centred on 220 nm and 270 nm, corresponding to species of tetrahedral Ti ("lattice Ti") and octahedral TI ("extra-lattice Ti"), respectively (Figure 3).

**Example 7: Preparation of a mesoporous molecular sieve type MCM-41 containing only tetrahedral Ti ("lattice Ti") in its composition.**

3.11 g of cetyltrimethylammonium bromide (CTAB) are dissolved in 20.88 g of water. To this solution 5.39 g of tetramethylammonium hydroxide (TMAOH) and 0.10 g of titanium tetraethoxide (TEOT) are added, and it is stirred until complete dissolution of the titanium. After that, 3.43 g of silica are added giving rise to a gel which is stirred at room temperature for 1 hour at 250 rpm. The resulting mixture is introduced into autoclaves and heated at 100°C at the autogenous pressure of the system for 48 hours. After that time, the solid is recovered by filtration, thoroughly washed with distilled water and dried at 60°C for 12 hours.

The activation of the material can be carried out by means of calcination or by chemical extraction. In the first case, 3.0 g of the solid material are placed in a tubular quartz reactor and a current of dry nitrogen is made to pass through it at 50 ml·min-1 while the temperature is raised to 540°C at 3°C·min-1. Once the temperature has been reached, nitrogen is passed for 60 minutes, after which the flow of nitrogen is replaced by a flow of dry air at 50 ml·min-1. The calcination is extended for further 360 minutes and the solid is cooled down to room temperature. This heat treatment permits all the organic matter occluded in the pores of the material to be completely eliminated. In the case of chemical extraction, 5.5 g of the material are treated with 276.4 g of a solution of 0.05 M sulphuric acid in ethanol. This suspension is stirred at reflux for one hour. The solid is recovered by filtration and washed with ethanol until neutral pH. The resulting solid is dried at 100°C for 30 minutes, with 3.51 g of product being obtained. The resulting solid is subjected to a second stage of extraction wherein 3.5 g of solid are added to a solution of 0.15 M hydrochloric acid in ethanol/heptane (48:52), using a liquid/solid ratio of 50. This suspension is refluxed with constant stirring for 24 hours, and then filtered and washed with ethanol. The resulting solid is dried at 60°C for 12 hours.

This solid displays a specific surface of 983 m-2·g-1 in addition to displaying a UV-Vis spectrum band centred at 220 nm, corresponding to species of tetrahedral Ti or Ti in lattice positions (Figure 3).

**Example 8: Sililation of a material like those described in examples 6 and 7.**

2.0 g of one of the samples obtained in examples 6 and 7 are dehydrated at 100°C and 10-3 Torr for 2 hours. The sample is cooled, and at room temperature a solution of 1.88 g of hexamethyldisilazane $(CH_3)_3Si-NH-Si-(CH_3)_3)$ is added in 30 g of toluene. The resulting mixture is refluxed at 120°C for 90 minutes and washed with toluene. The final product is dried at 60°C.

This solid displays a specific surface of 965 m-2·g-1 while the spectrum of 29Si-MAS-RMN displays a resonance band at -10 ppm assigned to the presence of Si-C bonds.

**Example 9: Comparison: Activity for the selective oxidation of sulphur compounds present in HCN gasoline with TBHP as oxidizing agent and in a single liquid phase, in the absence of solvent, using as catalysts mesoporous materials containing Ti without sililation (Example 6 and 7) and sililated (Example 8).**

200 mg of catalyst are introduced into a glass reactor at 80°C containing 5000 mg of heavy gasoline (HCN) and 200 mg of t-butyl hydroperoxide (TBHP, 80% sol. by weight). The reaction mixture consisting of a single liquid phase is stirred and a sample is taken after 7 hours of reaction. The samples are analysed by means of GC with specific S detector, with the conversions obtained for each of the tested catalysts being as follows:

| | S in Gasoline (ppm) -Specific S Detector | | |
|---|---|---|---|
| | **Ti-MCM-41 (Ex. 7)** | **Ti-MCM-41 (Ex. 6)** | **Ti-MCM-41 Sililated** (Ex. 8) |
| | "lattice Ti" | "lattice and extra-lattice Ti" | |
| Initial | 1383 | 1383 | 1383 |
| Final | 1126 | 1050 | 35 |
| Conv. (%) = | 19.3 | 24.1 | 98.0 |

The results clearly indicate that the mesoporous molecular sieves claimed in this invention and which contain Si-C bonds, in other words, which have been submitted to a process of sililation and are therefore organic-inorganic materials, are more active than those containing only Si and Ti.

**Example 10: Comparison: Activity for the selective oxidation of sulphur compounds present in simulated diesel with TBHP as oxidizing agent and in a single liquid phase, in the absence of solvent, using as catalysts mesoporous materials containing Ti without sililation (Example 6) and sililated (Example 8).**

30 mg of the materials described in examples 6 and 8 are introduced into a glass reactor at 80°C containing 15000 mg of simulated diesel and 80 mg of t-butyl hydroperoxide (TBHP, 80% sol. by weight). The reaction mixture consisting of a single liquid phase is stirred and a sample is taken after 7 hours of reaction. The samples are analysed by means of GC with specific S detector, with the conversions obtained for each of the tested catalysts being as follows:

```
        S in Gasoline (ppm)        -     Specific S Detector
              Ti-MCM-41                   Sililated Ti-MCM-41
     Initial                    860                       860
     Final                      491                         9
     ---------------------------------------------------------
     Conv. (%)          42.9                            99.0
```

**Example 11: Preparation of a microporous material (Beta type) containing practically all the Ti located in extra-lattice positions in its composition.**

30 g of tetraethylorthosilicate (TEOS) and 32.99 g of tetraethylammonium hydroxide (TEAOH, 35% aqueous solution) are mixed in a vessel and the mixture is left stirring and evaporating the ethanol formed in the hydrolysis of the TEOS. In order to clarify the solution, 3.2 g of hydrofluoric acid (HF, 48% in water) are added and a gel is obtained. A suspension of Beta zeolite seeds (0.36 g of dealuminized Beta zeolite in 1.5 g of water) is then added. The molar composition of the gel is as follows:

$SiO_2$ : 0.27 $TEA_2O$ : 0.54 HF : 7.5 $H_2O$

The resulting gel is placed in an autoclave lined with PTFE and heated at 140°C under rotation (60 rpm) for 24 hours. Finally, the product is recovered by filtration and a Beta zeolite is obtained whose X-ray diffraction pattern shows a crystallinity of 100%. the solid is calcined at 580°C for 3 hours maintaining a high crystallinity.

The solid thus obtained (Beta zeolite) is impregnated with a titanium compound on the surface, in accordance with the following process: 5 g of the Beta zeolite is impregnated with 50 g of a solution of titanium tetra-iso-propoxide Ti {[(CH$_3$-)$_2$ ⁂ CH-O]$_4$} in isopropanol (at 0.5% w/w), with stirring for 2 hours. The resulting mixture is vacuum heated with continual stirring until evaporation of the alcohol. The resulting solid is washed with dichloromethane and then calcined in an atmosphere of air at 580°C for 3 hours. The X-ray diffraction pattern of the solid obtained corresponds to the one shown in figure 4 and indicates that the crystallinity of the material has been maintained.

**Example 12: Comparison: Activity for the selective oxidation of sulphur compounds present in synthetic gasoline (A) with $H_2O_2$ and in the absence of solvent, using a Ti- Beta catalyst containing Ti in lattice and extra-lattice positions (Example 1), a Ti-Beta catalyst containing Ti only in lattice positions (Example 2) and a catalyst with Ti only in extra-lattice positions (Example 11).**

50 mg of one of the materials described in examples 1, 2 and 3 are introduced into a glass reactor at 80°C containing 15000 mg of synthetic gasoline (A) and 120 mg of hydrogen peroxide ($H_2O_2$, 35% sol. by weight), without introducing any co-solvent. The reaction mixture is stirred and a sample is taken after 7 hours of reaction. The samples are analysed by means of GC with special S detector, with the initial and final compositions in terms of content of non-oxidized sulphur compounds for the reaction mixtures and the conversions obtained being as follows:

```
      S in Mixture (ppm)        -     Special S Detector
   Ti-Beta                  Ti-Beta with Ti      Ti-Beta
   with Ti                   in lattice           with extra-
   in lattice               and extra-lattice    lattice Ti
   Initial       240              240                240
   Final          47               4                 140
   - - - - - - - - - - - - - - - - - - - - - - - - - - - - - - - - - - - - -
   Conv. (%) =    80.5            98.3               41.7
```

**Example 13: Influence of the content of lattice and extra-lattice Ti on the activity of the catalysts for the selective oxidation of sulphur compounds present in a mixture of synthetic gasoline (B) with $H_2O_2$ as oxidizing agent and in the absence of solvent.**

30 mg of the catalyst are introduced into a glass reactor at 80°C containing 15000 mg of synthetic gasoline (B) and 120 mg of hydrogen peroxide ($H_2O_2$, 35% sol. by weight) without any co-solvent. The reaction mixture is stirred and a sample is taken after 7 hours of reaction. The samples are analysed by means of GC with special S detector, and the conversions obtained for each of the catalysts tested are illustrated in figure 6.

**Example 14: Advantage of the catalyst containing lattice and extra-lattice Ti in comparison with one containing Ti only in the lattice, using 35% by weight H2O2 as oxidizing agent and without using co-solvent.**

30 mg of one of the microporous materials described (examples 1 and 2) are introduced into a glass reactor at 80°C containing 120 mg of hydrogen peroxide ($H_2O_2$, 35% sol. by weight) and 15000 mg of synthetic gasoline (B). No co-solvent is introduced. The reaction mixture is stirred and samples are taken at different reaction times in order to follow the kinetics of it up to a length of 7 hours of reaction. The catalysts used are described below:

- Ti-Beta (7.5% $TiO_2$) - Ti incorporated in lattice and extra-lattice positions (Example 1),
- Ti-Beta (2.3% $TiO_2$) - Ti incorporated only in lattice positions (Example 2),

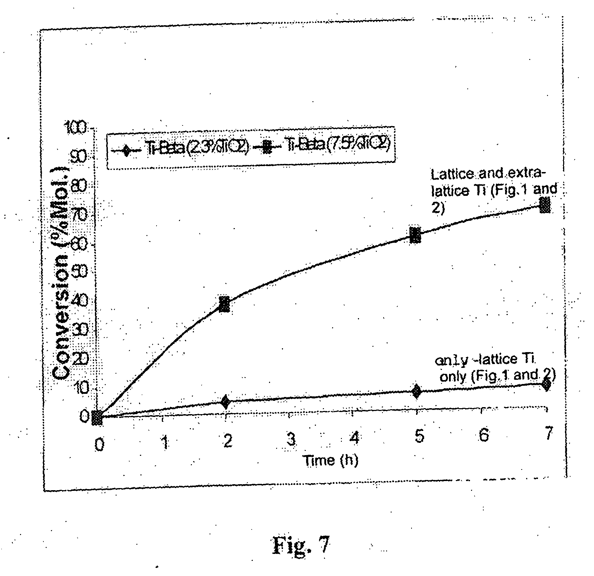

The results of the oxidation of sulphur compounds obtained for each sample, expressed as conversions as a function of time, can be seen in figure 7.

**Example 15: Advantage of the catalyst containing lattice and extra-lattice Ti in comparison with one containing Ti only in the lattice, using 35% by weight $H_2O_2$ as oxidizing agen, and acetonitrile as solvent, in different proportions.**

30 mg of one of the microporous materials described (examples 1 and 2) are introduced into a glass reactor at 80°C containing 120 mg of hydrogen peroxide ($H_2O_2$, 35% sol. by weight) and 15000 mg of a mixture composed of acetonitrile (co-solvent) and synthetic gasoline (B) in different ratios by weight. The reaction mixture is stirred and samples are taken at different reaction times in order to follow the kinetics of it up to 7 hours of reaction. The catalysts used are described below:

- Ti-Beta (7.5% $TiO_2$) - Ti incorporated in lattice and extra-lattice positions (Example 1),
- Ti-Beta (2.3% $TiO_2$) - Ti incorporated only in lattice positions (Example 2),

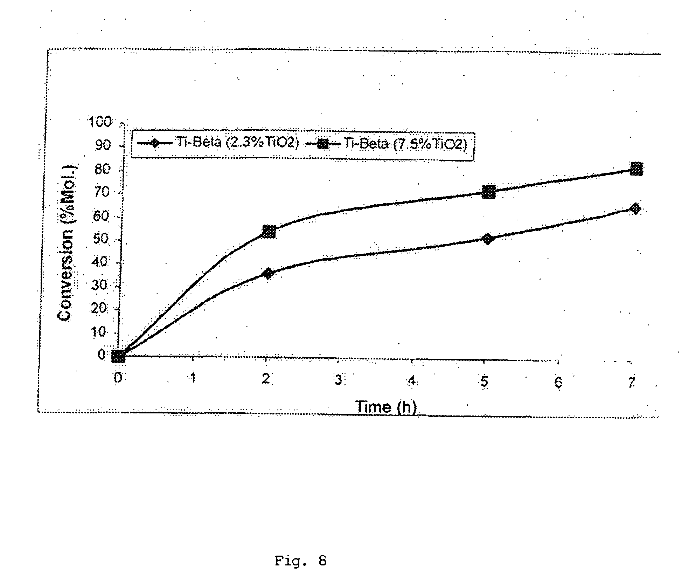

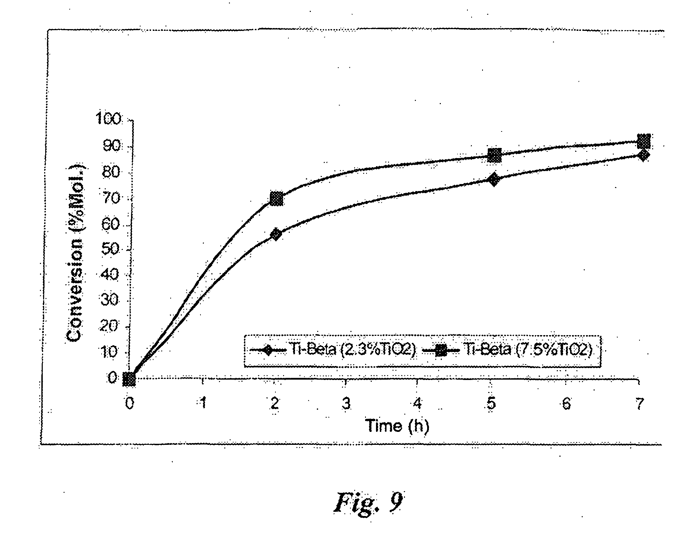

The results of the oxidation of sulphur compounds, expressed as conversions as a function of time, obtained for the said microporous materials at different ratios of acetonitrile/hydrocarbons can be seen in figure 8 (acetonitrile/hydrocarbon ratio = 0.15/1 = 2 g of acetonitrile / 13 g of hydrocarbons) and in figure 9 (acetonitrile/hydrocarbon ratio = 0.3/1 = 3.5 g of acetonitrile / 11.5 g of hydrocarbons).

**Example 16: Comparison: Activity for the selective oxidation of sulphur compounds present in synthetic diesel with H$_2$O$_2$ and in the absence of solvent, using a Ti- Beta catalyst containing Ti in lattice and extra-lattice positions (Example 1), and a Ti-Beta catalyst containing Ti only in lattice positions (example 2).**

30 mg of one of the materials described in examples 1 and 2 are introduced into a glass reactor at 80°C containing 15000 mg of synthetic diesel and 120 mg of hydrogen peroxide (H$_2$O$_2$, 35% sol. by weight). The reaction mixture is stirred and a sample is taken after 7 hours of reaction. The samples are analysed by means of GC with special S detector, with the initial and final compositions in terms of content of non-oxidized sulphur compounds for the reaction mixtures and the conversions obtained being as follows:

```
        S in Mixture (ppm)        -    Special S Detector
   Ti-Beta with Ti                     Ti-Beta with Ti
   in lattice and extra-lattice        in lattice (Ex. 2)


   Initial          300                            300
   Final            119                            199

   -----------------------------------------------------
   Conv. (%) =      60.1                          33.5
```

**Example 17: Sililation of a material like that described in example 1**

2.0 g of the sample obtained in example 1 are dehydrated at 100°C and 10-3 Torr for 2 hours. The sample is cooled, and at room temperature a solution of 1.88 g of hexamethyldisilazne (CH$_3$)$_3$Si-NH-Si-(CH$_3$)$_3$) is added in 30 g of toluene. The resulting mixture is refluxed at 120°C for 90 minutes and washed with toluene. The final product is dried at 60°C.

This solid displays bands in the UV-Vis spectrum centred on 220 and 270 nm, indicating the presence of Ti in lattice and extra-lattice positions, respectively. Also, the spectrum of 29Si-MAS-RMN displays a resonance band at -10 ppm assigned to the presence of Si-C bonds.

**Example 18: Comparison: Activity for the selective oxidation of sulphur compounds present in LCN gasoline with TBHP as oxidizing agent and in a single liquid phase, in the absence of solvent, using as catalysts mesoporous materials containing Ti without sililation (Example 1) and sililated (Example 17).**

200 mg of catalyst are introduced into a glass reactor at 80°C containing 5000 mg of light gasoline (LCN) and 200 mg of t-butyl hydroperoxide (TBHP, 80% sol. by weight). The reaction mixture is stirred and a sample is taken after 7 hours of reaction. The samples are analysed by means of GC with special S detector, with the conversions obtained for each of the tested catalysts being as follows:

```
        S in Gasoline (ppm)        -      (S Detector)
        Ti-Beta (Ex. 1)               Sililated Ti-Beta
                                            (Ex. 8)
   Initial            291                     291
   Final              177                     123

   -----------------------------------------------------
   Conv. (%) =       39.2                    ˙57.7
```

**Claims**

1.  A process for the oxidation of sulphur compounds of fuel fractions selected among gasoline fractions, kerosene fractions and diesel fractions, which comprises

    an oxidation stage wherein the reaction mixture containing at least one of said fractions is subjected to an oxidation reaction of said sulphur compounds with at least one oxidizing agent selected from among peroxides, inorganic peroxides, organic peroxides and hydroperoxides, in a single liquid phase and without using solvent, and in the presence of at least one solid micro- and/or mesoporous catalyst selected from among microporous molecular sieves, mesoporous molecular sieves and combinations thereof,

    and a separation stage wherein the unreacted products are separated from those which have reacted in the reaction stage,

    **characterized in that** the molecular sieves have a channel diameter greater than 0.6 nm and contain at least Si and Ti incorporated into the lattice and non-lattice positions.

2.  A process in accordance with claim 1, **characterized in that** the catalyst is a solid microporous catalyst comprising a microporous molecular sieve.

3.  A process in accordance with claim 2, **characterized in that** the content of lattice Ti plus extra-lattice Ti in the solid microporous catalyst lies between 3 and 12% by weight in the form of $TiO_2$ with respect to the total weight of the microporous molecular sieve.

4.  A process in accordance with claims 2 and 3, **characterized in that** the chemical composition of the solid microporous catalyst in its calcined and anhydrous state is

    $$y (A_{1/n}^{n+} XO_2) : t\ TO_2 : SiO_2 : X\ TiO_2$$

    wherein:

    - X represents at least one trivalent element,
    - y lies between 0 and 0.2,
    - A represents mono-, di- or trivalent cations, or mixtures thereof,
    - n = 1, 2 or 3,
    - T represents at least one tetravalent element other than Si and Ti,
    - t lies between 0 and 1, and
    - x lies between 0.02 and 0.12 (between 3 and 12% by weight in the form of $TiO_2$).

5.  A process in accordance with one of claims 2 to 4, **characterized in that** the solid microporous catalyst has a structure corresponding to a zeolite selected from among Beta zeolites, ITQ-7 zeolites, UTD-1 zeolites, Mordenite and ITQ-16 zeolites.

6.  A process in accordance with one of claims 2 to 4, **characterized in that** the solid microporous catalyst has a crystalline structure selected from among the crystalline structures of Beta zeolite, a polymorph of Beta zeolite and combinations thereof.

7.  A process in accordance with one of claims 2 to 6, **characterized in that** the solid microporous catalyst has been prepared by means of a process comprising a stage, selected between synthesis stages and post-synthesis stages, wherein Si-C bonds are introduced into the catalyst.

8.  A process in accordance with one of claims 2 to 7, **characterized in that** the solid microporous catalyst is included in an inorganic matrix, with a binder and combinations thereof.

9.  A process in accordance with one of claims 2 to 4, **characterized in that** the oxidizing agent is selected from between H2O2, aqueous $H_2O_2$, tert-butyl hydroperoxide, perborates and $H_2O_2$ - urea complex.

10. A process in accordance with claim 1, **characterized in that** it comprises carrying out an oxidation reaction of said sulphur compounds using aqueous $H_2O_2$ as oxidizing agent and using a co-solvent in a ratio by weight of the fraction of co-solvent/fuel that is < 8 and using microporous molecular sieve as catalysts.

**11.** A process in accordance with claim 4, **characterized in that** t lies between 0 and 0.2.

**12.** A process in accordance with claim 4, **characterized in that** the trivalent element X is selected from the group consisting of Fe, Al, B, Ga, Cr and combinations thereof.

**13.** A process in accordance with claim 4, **characterized in that** the tetravalent element T is selected from the group consisting of V and Sn and combinations thereof.

**14.** A process in accordance with claim 8, **characterized in that** the inorganic matrix is selected from the group consisting of silica, alumina, kaolin and combinations thereof.

**15.** A process in accordance with claim 1, **characterized in that** the oxidizing agent is selected from the group consisting of tert-butyl hydroperoxide, ethylbenzene hydroperoxide or cumene hydroperoxide.

**16.** A process in accordance with claim 10, **characterized in that** the co-solvent is selected from the group consisting of acetonitrile, methyl-tert-butyl-ether, nitromethane, dimethylsulphoxide and mixtures thereof.

**17.** A process in accordance with claim 1, **characterized in that** the solid mesoporous catalyst is selected from the group consisting of mesoporous molecular sieves and molecular sieves containing meso- and micropores and **in that** it contains at least Si, Ti incorporated into the lattice (in tetrahedral positions) and in non-lattice positions (octahedral) of the molecular sieve, and silicon bonded to carbon.

**18.** A process in accordance with claim 17, **characterized in that** the mesoporous molecular sieve in its calcined and anhydrous state, and without organic component, has the chemical composition:

$$y\,(A_{1/n}^{n+}\,XO_2) : t\,TO_2 : SiO_2 : x\,TiO_2$$

wherein:

- X represents at least one trivalent element,
- y lies between 0 and 0.2, and preferably between 0 and 0.1,
- A represents mono-, di- or trivalent compensation cations, or mixtures thereof,
- n = 1, 2 or 3,
- T represents at least one tetravalent element other than Si and Ti,
- t lies between 0 and 1, preferably between 0 and 0.2 and
- x lies between 0.015 and 0.065 (between 2 and 8% by weight in the form of $TiO_2$).

**19.** A process in accordance with one of claims 17 and 18, **characterized in that** the solid mesoporous catalyst corresponds to a material selected from the group consisting of materials of the type MCM-41, MCM-48, SBA-15 and HMS.

**20.** A process in accordance with one of claims 17 to 19, **characterized in that** the solid mesoporous catalyst has been prepared by means of a process comprising a stage, selected between synthesis stages and post-synthesis stages, wherein Si-C bonds are introduced into the catalyst.

**21.** A process in accordance with one of claims 17 to 20, **characterized in that** the solid mesoporous catalyst is included in an inorganic matrix.

**22.** A process in accordance with one of claims 17 to 21, **characterized in that** the oxidizing agent is selected from among organic hydroperoxides.

**23.** A process in accordance with one of claims 17 to 21, **characterized in that** the oxidizing agent is an $H_2O_2$ - urea complex.

**24.** A process in accordance with one of claims 17 to 21, **characterized in that** the oxidizing agent is a perborate.

**25.** A process in accordance with claim 1, **characterized in that** said oxidation reaction is carried out in a reactor selected from the group consisting of a discontinuous reactor, a CSTR reactor, a continuous fixed bed reactor, a fluidized bed reactor and a boiling bed reactor.

26. A process in accordance with claim 1, **characterized in that** said oxidation reaction is carried out in a discontinuous reactor, with a ratio by weight of the fuel fraction to catalyst of between 5 and 600, a ratio by weight between the fuel fraction and the oxidizing agent between 300 and 10, and a co-solvent/fuel fraction ratio between 0 and 8, particularly between 0 and 4.

27. A process in accordance with claim 26, **characterized in that** said ratio by weight between the fuel fraction and the catalyst lies between 10 and 300.

28. A process in accordance with claim 26, **characterized in that** said ratio by weight between the fuel fraction and the oxidizing agent lies between 200 and 20.

29. A process in accordance with claims 1 to 28, **characterized in that** said oxidation reaction is carried out at a temperature between 10 and 120°C.

30. A process in accordance with claim 1, **characterized in that** said oxidation reaction is carried out at a temperature between 20 and 80°C.

31. A process in accordance with claim 1, **characterized in that** said oxidation reaction takes place in a reaction time of between 2 minutes and 24 hours.

32. A process in accordance with claim 1, **characterized in that** said separation stage is selected from between adsorption stages, distillation stages, extraction stages with a solvent and combinations thereof.

33. A process in accordance with claims 7 or 20, **characterized in that** the Si-C bonds have been introduced into the catalyst in a post-synthesis sililation stage.

34. A process in accordance with claims 8 or 21, **characterized in that** the inorganic matrix is selected from between silica matrices, alumina matrices, kaolin matrices and combinations thereof.

35. A process in accordance with claim 22, **characterized in that** the oxidizing agent is tert-butyl hydroperoxide.

36. A process in accordance with claim 1 or 32, **characterized in that** it also comprises a recycling stage, wherein at least part of the unreacted products are reintroduced into the reaction mixture.

37. A process in accordance with any of the foregoing claims, **characterized in that** the oxidation is a selective oxidation.

Wavelength (nm)

*Fig.1*

Fig. 2

Fig. 3

Fig. 4

Oxidation of sulphur compounds present in synthetic gasolines (B) with microporous materials containing Ti at 80°C for 7h. (initial S = 220 ppm)

*Fig.5*

*Fig. 6*

Fig. 7

Fig. 8

*Fig. 9*

## INTERNATIONAL SEARCH REPORT

| | International application No. |
|---|---|
| | PCT/ES 02/00546 |

**A. CLASSIFICATION OF SUBJECT MATTER**

IPC⁷ C10G 27/04, 27/12, B01J 29/18, 29/83, 29/85, 29/035

According to International Patent Classification (IPC) or to both national classification and IPC

**B. FIELDS SEARCHED**

Minimum documentation searched (classification system followed by classification symbols)

IPC⁷ C10G, B01J

Documentation searched other than minimum documentation to the extent that such documents are included in the fields searched

Electronic data base consulted during the international search (name of data base and, where practicable, search terms used)

EPODOC, WPI, CAPLUS

**C. DOCUMENTS CONSIDERED TO BE RELEVANT**

| Category* | Citation of document, with indication, where appropriate, of the relevant passages | Relevant to claim No. |
|---|---|---|
| P, X | WO 0231086 A (CSC-UPV) 18.04.2002, **see the whole document** | 1-37 |
| P, X | WO 2083819 A (CSIC-UPV) 24.10.2002, **see the whole document** | 1-37 |
| A | WO 0148119 A (ELF ANTAR FRANCE) 05.07.2001, **page** 5, **lines** 6-22, **page** 6, **lines** 18-21, **claims** 1,2,7,15, **examples** 3,6 | 1-37 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier document but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 February 2003 (24.02.03)** | **21 March 2003 (21.03.03)** |

| Name and mailing address of the ISA/ | Authorized officer |
|---|---|
| **SPTO** | |
| Facsimile No. | Telephone No. |

Form PCT/ISA/210 (second sheet) (July 1992)

**INTERNATIONAL SEARCH REPORT**

Information on patent family members

| | International Application No |
|---|---|
| | PCT/ES 02/00546 |

| Patent document cited in search report | Publication date | Patent familiy member(s) | Publication date |
|---|---|---|---|
| WO 2083819 A | 24.10.2002 | NONE | |
| WO 0231086 A | 18.04.2002 | AU 9388601 A<br>ES 2179753 A | 22.04.2002<br>16.01.2003 |
| WO 0148119 A | 05.07.2001 | FR 2802939 A<br>EP 1246889 A | 29.06.2001<br>09.10.2002 |

Form PCT/ISA/210 (patent family annex) (July 1992)